# FASCICULE DE BREVET EUROPEEN

(11) **EP 4 600 508 B1**
(45) Date de publication et mention de la délivrance du brevet: **25.03.2026**
(21) Numéro de dépôt: 25156615.4
(22) Date de dépôt: 07.02.2025
(51) Int. Cl.: F16B 5/02, F16B 37/04, F16B 37/06

(54) **SYSTÈME D'ÉCROU FLOTTANT DE MASSE RÉDUITE ET PROCÉDÉ D'ASSEMBLAGE DE DEUX PIÈCES À L'AIDE DUDIT SYSTÈME**
SCHWIMMENDES MUTTERSYSTEM MIT REDUZIERTER MASSE UND VERFAHREN ZUM VERBINDEN ZWEIER TEILE MIT DIESEM SYSTEM
REDUCED MASS FLOATING NUT SYSTEM AND METHOD OF ASSEMBLING TWO PARTS USING SAME

(30) Priorité: 12.02.2024 FR 2401342
(43) Date de publication de la demande: 13.08.2025
(73) Titulaire: AIRBUS OPERATIONS (S.A.S.), 31060 Toulouse (FR)
(72) Inventeur: GOUPIL, Frédéric, 31060 Toulouse (FR); COLLOT, Emmanuel, 31060 Toulouse (FR); VIAUVY, Ghislain, 31060 Toulouse (FR); ABBOUAB, Emma, 31060 Toulouse (FR)
(74) Mandataire: Airbus-OPS SAS

(56) Documents cités:
- EP-B1- 3 724 520
- KR-A- 20180 022 609

## Description

### Domaine technique

La présente invention concerne un système d'écrou flottant de masse réduite et un procédé d'assemblage de deux pièces à l'aide dudit système.

### État de la technique

Lorsqu'une pièce doit être assemblée avec une autre pièce, il peut exister des désalignements entre les deux pièces dus aux tolérances d'assemblage. La façon la plus courante pour pallier ce désalignement est l'utilisation d'un écrou flottant, composé d'un écrou métallique captif dans une cage métallique. Avant l'assemblage, cette cage métallique peut être installée par des opérations telles que l'expansion à froid dans un trou d'une des pièces ou bien par rivetage dans une des pièces.

Ce type d'écrou flottant demande donc des opérations fastidieuses pour être installé. Quand le nombre d'écrous flottants est important, le temps d'installation peut être long et les opérations fastidieuses. Par exemple, environ quatre mille écrous flottants peuvent être installés pour un carénage ventral d'un aéronef. L'ensemble des écrous flottants présente alors une masse très importante. Un système d'écrou flottant selon l'art antérieur est divulgué dans le document EP3724520 B1.

### Exposé de l'invention

La présente invention a pour objet de proposer un système d'écrou flottant de masse réduite pour un assemblage entre deux pièces à assembler, avec les caractéristiques techniques de la revendication 1.

Pour cela, elle concerne un système d'écrou flottant destiné à assembler une première pièce et une deuxième pièce, la première pièce comportant une première ouverture destinée au passage d'une vis, la première ouverture présentant un premier axe de révolution.

Selon l'invention, le système d'écrou flottant comprend au moins un dispositif de cage en élastomère et un dispositif d'écrou,
le dispositif de cage comportant :
   - un premier cylindre creux présentant un deuxième axe de révolution et un diamètre externe sensiblement égal à un diamètre d'une deuxième ouverture pratiquée dans la deuxième pièce, le premier cylindre étant destiné à être introduit dans la deuxième ouverture par une première extrémité du premier cylindre,
   - une première couronne faisant saillie autour d'une deuxième extrémité du premier cylindre sur la surface externe du premier cylindre, la première couronne présentant un diamètre destiné à être supérieur au diamètre de la deuxième ouverture ;
le dispositif d'écrou comportant :
   - un deuxième cylindre creux présentant un troisième axe de révolution parallèle au deuxième axe de révolution et une surface interne comportant un filetage, le filetage étant destiné à coopérer avec la vis par vissage de la vis,
   - une rondelle solidaire du deuxième cylindre, la rondelle faisant le tour du deuxième cylindre, la rondelle présentant un diamètre destiné à être supérieur au diamètre de la deuxième ouverture, la rondelle étant enchâssée dans la première couronne, la rondelle étant destinée à presser la première couronne contre la deuxième pièce quand la vis est vissée dans le filetage ;
le premier cylindre étant configuré pour se déformer lors du vissage de la vis pour que le premier axe de révolution et le troisième axe de révolution soient sensiblement confondus quand une vis est vissée dans le filetage.

Ainsi, grâce au dispositif de cage en élastomère, le système d'écrou flottant présente une masse réduite tout en palliant un désalignement entre les deux pièces à assembler.

En outre, le dispositif de cage comprend une deuxième couronne faisant saillie autour de la première extrémité du premier cylindre sur une surface externe du premier cylindre, la deuxième couronne présentant un diamètre configuré pour être supérieur au diamètre de la deuxième ouverture, la deuxième couronne étant déformable élastiquement de façon, d'une part, qu'elle se plie contre le premier cylindre pour passer au travers de la deuxième ouverture quand un utilisateur force le passage du dispositif de cage à travers la deuxième ouverture parallèlement au deuxième axe de révolution, et, d'autre part, qu'elle se déplie après qu'elle est passée au travers de la deuxième ouverture,
la deuxième couronne étant destinée à être enserrée entre la première pièce et la deuxième pièce quand la vis est vissée dans le filetage.

Selon un mode de réalisation, la deuxième couronne comprend une pluralité d'ailettes faisant saillie autour de la première extrémité du premier cylindre.

Avantageusement, la surface externe du premier cylindre présente une pluralité de rainures longitudinales parallèles entre elles, chacune des rainures étant disposée au droit de chacune des ailettes, chacune des rainures étant destinée à loger l'ailette au droit de laquelle une rainure est disposée quand ladite ailette est pliée afin que la deuxième couronne puisse passer au travers de la deuxième ouverture quand un utilisateur force le passage du dispositif de cage à travers la deuxième ouverture parallèlement au deuxième axe de révolution.

Par ailleurs, le dispositif d'écrou comprend une partie conique solidaire du deuxième cylindre, la partie conique ayant une forme de cône tronqué présentant une petite base connectant la partie conique à une première extrémité du deuxième cylindre et une grande base destinée à faire face à la première ouverture.

En outre, le système d'écrou flottant comprend un anneau présentant un axe de révolution confondu avec le deuxième axe de révolution, l'anneau étant enchâssé dans le premier cylindre, l'anneau présentant une épaisseur sensiblement destinée à être égale à une épaisseur de la deuxième pièce susceptible d'être assemblée à la première pièce par le système d'écrou flottant, l'anneau étant configuré pour ne pas se déformer quand le premier cylindre se déforme.

De plus, la première couronne présente un bord circulaire, la première couronne comportant une paroi cylindrique sur le bord circulaire, la paroi cylindrique présentant une extrémité libre destinée à être pressée contre la deuxième pièce quand la vis est vissée dans le filetage.

L'invention concerne également un procédé d'assemblage d'une première pièce et d'une deuxième pièce à l'aide d'un système d'écrou flottant tel que spécifié cidessus, selon la revendication 8.

Selon l'invention, le procédé comprend les étapes suivantes :
- une étape d'introduction du premier cylindre dans la deuxième ouverture par la première extrémité du premier cylindre ;
- une étape d'introduction d'une vis dans la première ouverture ;
- une première étape de déformation par cisaillement du premier cylindre jusqu'à ce que le premier axe de révolution du premier cylindre et le troisième axe de révolution du deuxième cylindre soient sensiblement confondus ;
- une étape d'introduction de la vis dans le deuxième cylindre ;
- une étape de vissage de la vis dans le filetage de la surface interne du deuxième cylindre ;
- une deuxième étape de déformation par compression du premier cylindre jusqu'à ce que la rondelle presse le première couronne contre la deuxième pièce.

De plus, l'étape d'introduction du premier cylindre comprend :
- une sous-étage de pliage de la deuxième couronne par déformation élastique contre le premier cylindre en passant à travers la deuxième ouverture ;
- une sous-étape de dépliage de la deuxième couronne après le passage de la deuxième couronne dans la deuxième ouverture.

Par ailleurs, la première étape de déformation comprend :
- une sous-étape d'introduction de la vis dans la partie conique ;
- une sous-étape de déformation du premier cylindre au fur et à mesure que la vis entre dans la partie conique jusqu'à ce que la vis entre dans le deuxième cylindre.

### Brève description des figures

Les figures annexées feront bien comprendre comment l'invention peut être réalisée. Sur ces figures, des références identiques désignent des éléments semblables.
La figure 1 représente une vue en perspective du système d'écrou flottant.
La figure 2 représente une coupe diamétrale du système d'écrou flottant et de deux pièces à assembler.
La figure 3 représente schématiquement le procédé d'assemblage à l'aide du système d'écrou flottant.
La figure 4 représente une coupe diamétrale du système d'écrou flottant et des deux pièces à assembler avant l'introduction du premier cylindre dans la deuxième ouverture.
La figure 5 représente une coupe diamétrale du système d'écrou flottant et des deux pièces à assembler au début de l'introduction du premier cylindre dans la deuxième ouverture.
La figure 6 représente une coupe diamétrale du système d'écrou flottant et des deux pièces à assembler pendant l'introduction du premier cylindre dans la deuxième ouverture.
La figure 7 représente une coupe diamétrale du système d'écrou flottant, des deux pièces à assembler et d'une vis pendant l'introduction de la vis dans la première ouverture.
La figure 8 représente une coupe diamétrale du système d'écrou flottant, des deux pièces à assembler et de la vis au début du vissage de la vis dans le filetage du deuxième cylindre.
La figure 9 représente une coupe diamétrale du système d'écrou flottant, des deux pièces à assembler et de la vis quand la vis est vissée complètement dans le filetage du deuxième cylindre.

### Description détaillée

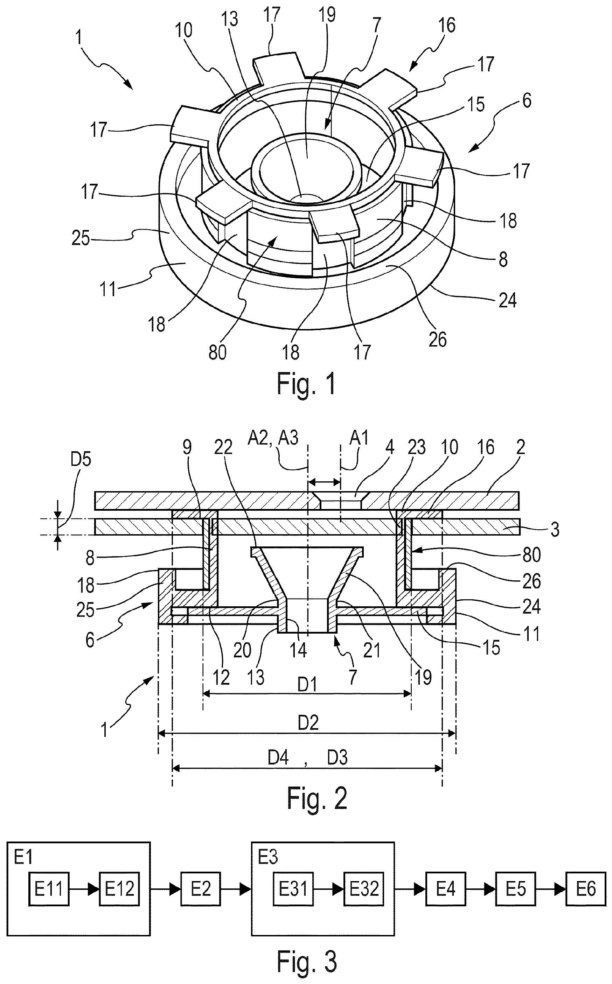

La figure 1 et la figure 2 représentent le système d'écrou flottant 1 destiné à assembler une première pièce 2 et une deuxième pièce 3.

De façon non limitative, la première pièce 2 et la deuxième pièce 3 peuvent correspondre chacune à une plaque métallique que l'on souhaite assembler. La première pièce 2 et la deuxième pièce 3 peuvent aussi correspondre à des carénages ventraux d'aéronef que l'on souhaite assembler.

La première pièce 2 comporte une première ouverture 4 destinée au passage d'une vis 5. La première ouverture 4 présente un premier axe de révolution A1.

La première ouverture 4 peut avoir été pratiquée à l'avance par un outil avant le placement de la première pièce 2 par rapport à la deuxième pièce 3.

Le système d'écrou flottant 1 comprend au moins un dispositif de cage 6 en élastomère et un dispositif d'écrou 7. Le dispositif de cage 6 emprisonne le dispositif d'écrou 7.

Le dispositif de cage 6 comporte un premier cylindre 8 creux. Le premier cylindre 8 présent un deuxième axe de révolution A2. Le diamètre externe D1 du premier cylindre 8 est sensiblement égal à un diamètre d'une deuxième ouverture 9 pratiquée dans la deuxième pièce 3. Comme pour la première ouverture 4, la deuxième ouverture 9 peut avoir été pratiquée à l'avance par un outil avant le placement de la première pièce 2 par rapport à la deuxième pièce 3.

Le premier cylindre 8 est destiné à être introduit dans la deuxième ouverture 9 par une première extrémité 10 du premier cylindre 8.

Le dispositif de cage 6 comporte également une première couronne 11. La première couronne 11 fait saillie autour d'une deuxième extrémité 12 du premier cylindre 8 sur la surface externe 80 du premier cylindre 8. La première couronne 11 présente un diamètre D2 destiné à être supérieur au diamètre de la deuxième ouverture 9. Le dispositif d'écrou 7 comporte un deuxième cylindre 13 creux présentant un troisième axe de révolution A3 parallèle au deuxième axe de révolution A2. La surface interne 14 du deuxième cylindre 13 comporte un filetage. Le filetage est destiné à coopérer avec la vis 5 par vissage de la vis 5 dans ledit filetage.

Le dispositif d'écrou 7 comprend en outre une rondelle 15 solidaire du deuxième cylindre 13. La rondelle 15 fait le tour du deuxième cylindre 13, autrement, la rondelle 15 fait saillie autour du deuxième cylindre 13. La rondelle 15 présente un diamètre D3 destiné à être supérieur au diamètre de la deuxième ouverture 9. La rondelle 15 est enchâssée dans la première couronne 11. En plus d'être enchâssée, des moyens de fixation supplémentaires peuvent être prévus tels que surmoulage, collage ou tout autre moyen de fixation de la rondelle à la couronne équivalent. La rondelle 15 est destinée à déformer le premier cylindre 8 en pressant la première couronne 11 contre la deuxième pièce 3 quand la vis 5 est vissée dans le filetage. Le premier cylindre 8 est configuré pour se déformer lors du vissage de la vis 5 pour que le premier axe de révolution A1 et le troisième axe de révolution A3 soient sensiblement confondus quand une vis 5 est vissée dans le filetage. De façon non limitative, la configuration permettant de déformer le premier cylindre 8 peut dépendre de la matière dans laquelle le dispositif de cage 6 est fabriqué et l'épaisseur de la paroi du premier cylindre 8.

Le dispositif d'écrou 7 peut être fabriqué en matière métallique, tel que de l'acier inoxydable ou de l'aluminium.

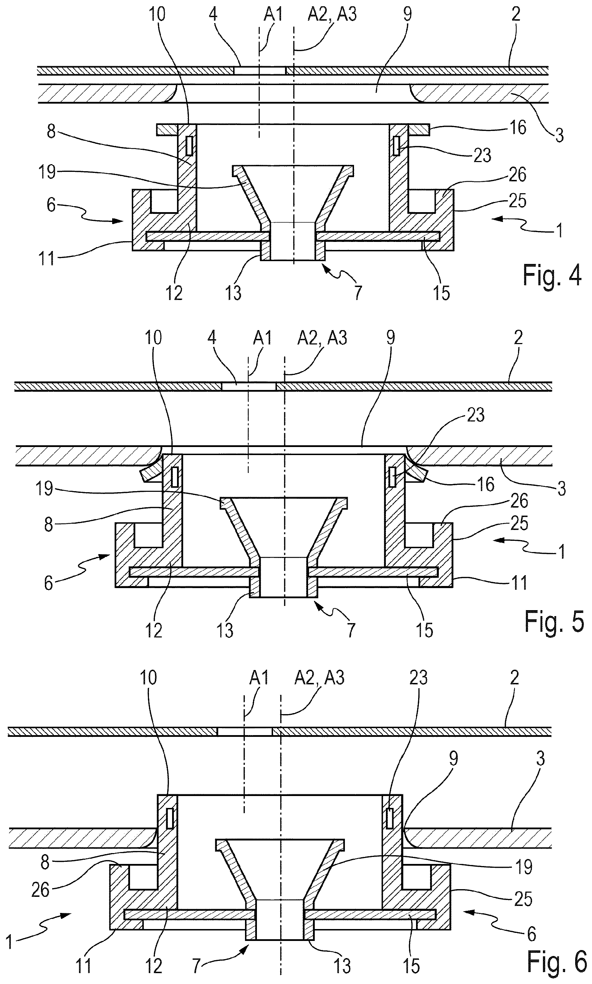

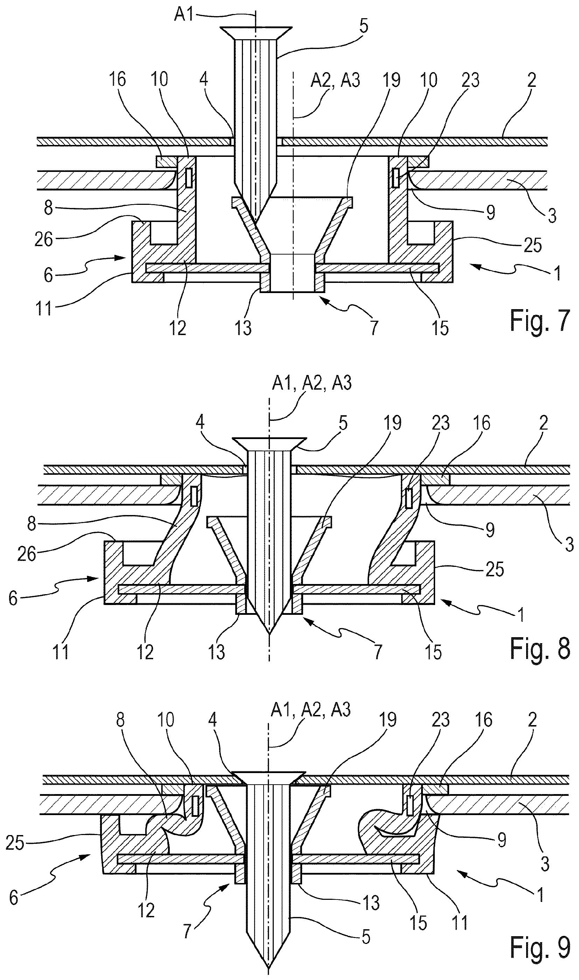

Avantageusement, le dispositif de cage 6 comprend en outre une deuxième couronne 16 faisant saillie autour de la première extrémité 10 du premier cylindre 8 sur une surface externe 80 du premier cylindre 8. La deuxième couronne 16 présentant un diamètre D4 configuré pour être supérieur au diamètre de la deuxième ouverture 9. La deuxième couronne 16 est configurée pour être déformable élastiquement de façon, d'une part, qu'elle se plie contre le premier cylindre 8 pour passer au travers de la deuxième ouverture 9 quand un utilisateur force le passage du dispositif de cage 6 à travers la deuxième ouverture 9 parallèlement au deuxième axe de révolution A2 (figure 5 et figure 6), et, d'autre part, qu'elle se déplie après qu'elle est passée au travers de la deuxième ouverture 9 (figure 7).

La deuxième couronne 16 est destinée à être enserrée entre la première pièce 2 et la deuxième pièce 3 quand la vis 5 est vissée dans le filetage.

La deuxième couronne 16 enserrée entre la première pièce 2 et la deuxième pièce 3 permet d'obtenir un maintien du premier cylindre 8 dans la deuxième ouverture 9 lors d'un procédé d'assemblage (décrit ci-après) de la première pièce 2 et la deuxième pièce 3. Ainsi, le premier cylindre 8 ne s'échappe pas de la deuxième ouverture 9 lors dudit procédé d'assemblage.

Selon un mode de réalisation, la deuxième couronne 16 comprend une pluralité d'ailettes 17 faisant saillie autour de la première extrémité 10 du premier cylindre 8. La surface externe 80 du premier cylindre 8 peut présenter une pluralité de rainures 18 longitudinales parallèles entre elles. Chacune des rainures 18 est disposée au droit de chacune des ailettes 17. Chacune des rainures 18 est destinée à loger l'ailette 17 au droit de laquelle une rainure 18 est disposée quand ladite ailette 17 est pliée afin que la deuxième couronne 16 puisse passer au travers de la deuxième ouverture 9 quand un utilisateur force le passage du dispositif de cage 6 (ou du système d'écrou flottant 1) à travers la deuxième ouverture 9 parallèlement au deuxième axe de révolution A2. La figure 6 montre un moment de l'introduction du système d'écrou flottant 1 pendant lequel les ailettes sont pliées dans les rainures 18 permettant le passage du dispositif de cage 6 à travers la deuxième ouverture 9. Avantageusement, le dispositif d'écrou 7 comprend une partie conique 19 solidaire du deuxième cylindre 13. La partie conique 19 présente une forme de cône tronqué ayant une petite base 21 et une grande base 22. La petite base 21 connecte la partie conique 19 à une première extrémité 20 du deuxième cylindre 13. La grande base 22 est destinée à faire face à la première ouverture 4 quand le premier cylindre 8 est introduit dans la deuxième ouverture 9. La partie conique 19 permet de guider l'extrémité libre de la vis 5 vers le deuxième cylindre 13 afin de visser la vis 5 dans le filetage du deuxième cylindre 13.

Le système d'écrou flottant 1 peut comprendre en outre un anneau 23 présentant un axe de révolution confondu avec le deuxième axe de révolution A2 quand le premier cylindre 8 n'est pas déformé. L'anneau 23 est enchâssé dans le premier cylindre 8. L'anneau 23 présente une épaisseur D5 sensiblement destinée à être égale à une épaisseur de la deuxième pièce 3 susceptible d'être assemblée à la première pièce 2 par le système d'écrou flottant 1. L'anneau 23 est configuré pour ne pas se déformer quand le premier cylindre 8 se déforme. L'anneau permet de conserver la forme cylindrique du premier cylindre 8 au niveau de la deuxième ouverture 9.

La première couronne 11 peut présenter un bord circulaire 24. La première couronne 11 peut comporter une paroi cylindrique 25 sur le bord circulaire 24. La paroi cylindrique 11 présente une extrémité libre 26 destinée à être pressée contre la deuxième pièce 3 quand la vis 5 est vissée dans le filetage.

L'invention concerne aussi un procédé d'assemblage d'une première pièce 2 et d'une deuxième pièce 3 à l'aide du système d'écrou flottant 1 (figure 3).

Le procédé d'assemblage comprend les étapes suivantes :
- une étape E1 d'introduction du premier cylindre 8 dans la deuxième ouverture 9 par la première extrémité 10 du premier cylindre 8 (figure 4, figure 5 et figure 6) ;
- une étape E2 d'introduction d'une vis 5 dans la première ouverture 4 (figure 7) ;
- une première étape E3 de déformation par cisaillement du premier cylindre 8 jusqu'à ce que le premier axe de révolution A1 de l'ouverture 4 et le troisième axe de révolution A3 du deuxième cylindre 13 soient sensiblement confondus (figure 8) ;
- une étape E4 d'introduction de la vis 5 dans le deuxième cylindre 13 (figure 8) ;
- une étape E5 de vissage de la vis 5 dans le filetage de la surface interne 14 du deuxième cylindre 13 ;
- une deuxième étape E6 de déformation par compression du premier cylindre 8 jusqu'à ce que la rondelle 15 presse le première couronne 11 contre la deuxième pièce 3 (figure 9).

L'étape E1 d'introduction du premier cylindre 8 peut comprendre :
- une sous-étage E11 de pliage de la deuxième couronne 16 par déformation élastique contre le premier cylindre 8 en passant à travers la deuxième ouverture 9 (figure 5 et figure 6) ;
- une sous-étape E12 de dépliage de la deuxième couronne 16 après le passage de la deuxième couronne 16 dans la deuxième ouverture 9 (figure 7).

La première étape E3 de déformation peut comprendre :
- une sous-étape E31 d'introduction de la vis 5 dans la partie conique (19) (figure 7) ;
- une sous-étape E32 de déformation du premier cylindre 8 au fur et à mesure que la vis 5 entre dans la partie conique 19 jusqu'à ce que la vis 5 entre dans le deuxième cylindre 13 (figure 8).

Ainsi, le premier cylindre 8 est susceptible de se déformer à cause de deux contraintes mécaniques. La première contrainte mécanique correspond à une contrainte de cisaillement. La déformation du premier cylindre 8 par la contrainte de cisaillement permet de faire en sorte que le premier axe de révolution A1 de l'ouverture 4 et le troisième axe de révolution A3 du deuxième cylindre 13 soient sensiblement confondus. La contrainte de cisaillement est exercée par le déplacement de la rondelle 15 entraînée par la vis 5. La vis 5 est guidée est guidée vers le deuxième cylindre 13 pour y être vissée par la partie conique 19 du dispositif d'écrou 7. La deuxième contrainte mécanique correspond à une contrainte de compression uniaxiale. La déformation du premier cylindre 8 par la contrainte de compression uniaxiale apparaît quand la vis 5 est vissée dans le deuxième cylindre 13 jusqu'à ce que la vis 5 soit vissée complètement. La contrainte de compression uniaxiale présente un sens parallèle au troisième axe de révolution A3. La contrainte de compression uniaxiale est donc exercée par la rondelle 15. Quand la vis 5 est vissée dans le deuxième cylindre 13, la vis 5 tire la rondelle 15 vers la deuxième pièce 3. La rondelle 15 exerce ainsi une contrainte de compression sur le premier cylindre 8.

Le système d'écrou flottant 1 apporte de nombreux avantages.
- il présente une masse réduite par rapport à celui des écrous flottants de l'art antérieur.
- il permet de réduire le temps d'assemblage en usine.
- il permet d'être utilisé en cas de petite ou de grande flottabilité, c'est-à-dire il peut être utilisé en cas de petit ou de grand désalignement entre les deux pièces à assembler.
- il peut être utilisé dans une grande gamme de configurations, par exemple dans le carénage ventral d'un aéronef, une cabine d'aéronef, etc.
- il présente une grande réparabilité en étant facile et rapide à être remplacé en cas de besoin.
- il présente un isostatisme permettent une filtration des vibrations exercées par les pièces assemblées.
- il permet d'éviter les problèmes de corrosion galvanique.

## Revendications

1. Système d'écrou flottant destiné à assembler une première pièce (2) et une deuxième pièce (3), la première pièce (2) comportant une première ouverture (4) destinée au passage d'une vis (5), la première ouverture (4) présentant un premier axe de révolution (A1),
où le système comprend au moins un dispositif de cage (6) en élastomère et un dispositif d'écrou (7),
le dispositif de cage (6) comportant :
- un premier cylindre (8) creux présentant un deuxième axe de révolution (A2) et un diamètre externe (D1) sensiblement égal à un diamètre d'une deuxième ouverture (9) pratiquée dans la deuxième pièce (3), le premier cylindre (8) étant destiné à être introduit dans la deuxième ouverture (9) par une première extrémité (10) du premier cylindre (8),
- une première couronne (11) faisant saillie autour d'une deuxième extrémité (12) du premier cylindre (8) sur la surface externe (80) du premier cylindre (8), la première couronne (11) présentant un diamètre (D2) destiné à être supérieur au diamètre de la deuxième ouverture (9) ;
le dispositif d'écrou (7) comportant :
- un deuxième cylindre (13) creux présentant un troisième axe de révolution (A3) parallèle au deuxième axe de révolution (A2) et une surface interne (14) comportant un filetage, le filetage étant destiné à coopérer avec la vis (5) par vissage de la vis (5),
- une rondelle (15) solidaire du deuxième cylindre (13), la rondelle (15) faisant le tour du deuxième cylindre (13), la rondelle (15) présentant un diamètre (D3) destiné à être supérieur au diamètre de la deuxième ouverture (9), la rondelle (15) étant enchâssée dans la première couronne (11), la rondelle (15) étant destinée à presser la première couronne (11) contre la deuxième pièce (3) quand la vis (5) est vissée dans le filetage ;
le premier cylindre (8) étant configuré pour se déformer lors du vissage de la vis (5) pour que le premier axe de révolution (A1) et le troisième axe de révolution (A3) soient sensiblement confondus quand une vis (5) est vissée dans le filetage.

2. Système selon la revendication 1,
**caractérisé en ce que** le dispositif de cage (6) comprend en outre une deuxième couronne (16) faisant saillie autour de la première extrémité (10) du premier cylindre (8) sur une surface externe (80) du premier cylindre (8), la deuxième couronne (16) présentant un diamètre (D4) configuré pour être supérieur au diamètre de la deuxième ouverture (9), la deuxième couronne (16) étant déformable élastiquement de façon, d'une part, qu'elle se plie contre le premier cylindre (8) pour passer au travers de la deuxième ouverture (9) quand un utilisateur force le passage du dispositif de cage (6) à travers la deuxième ouverture (9) parallèlement au deuxième axe de révolution (A2), et, d'autre part, qu'elle se déplie après qu'elle est passée au travers de la deuxième ouverture (9),
la deuxième couronne (16) étant destinée à être enserrée entre la première pièce (2) et la deuxième pièce (3) quand la vis (5) est vissée dans le filetage.

3. Système selon la revendication 2,
**caractérisé en ce que** la deuxième couronne (16) comprend une pluralité d'ailettes (17) faisant saillie autour de la première extrémité (10) du premier cylindre (8).

4. Système selon la revendication 3,
**caractérisé en ce que** la surface externe (80) du premier cylindre (8) présente une pluralité de rainures (18) longitudinales parallèles entre elles, chacune des rainures (18) étant disposée au droit de chacune des ailettes (17), chacune des rainures (18) étant destinée à loger l'ailette (17) au droit de laquelle une rainure (18) est disposée quand ladite ailette (17) est pliée afin que la deuxième couronne (16) puisse passer au travers de la deuxième ouverture (9) quand un utilisateur force le passage du dispositif de cage (6) à travers la deuxième ouverture (9) parallèlement au deuxième axe de révolution (A2).

5. Système selon l'une des revendications 1 à 4,
**caractérisé en ce que** le dispositif d'écrou (7) comprend une partie conique (19) solidaire du deuxième cylindre (13), la partie conique (19) ayant une forme de cône tronqué présentant une petite base (21) connectant la partie conique (19) à une première extrémité (20) du deuxième cylindre (13) et une grande base (22) destinée à faire face à la première ouverture (4).

6. Système selon l'une des revendications 1 à 5,
**caractérisé en ce qu'**il comprend en outre un anneau (23) présentant un axe de révolution confondu avec le deuxième axe de révolution (A2), l'anneau (23) étant enchâssé dans le premier cylindre (8), l'anneau (23) présentant une épaisseur (D5) sensiblement destinée à être égale à une épaisseur de la deuxième pièce (3) susceptible d'être assemblée à la première pièce (2) par le système d'écrou flottant (1), l'anneau (23) étant configuré pour ne pas se déformer quand le premier cylindre (8) se déforme.

7. Système selon l'une des revendications 1 à 6,
**caractérisé en ce que** la première couronne (11) présente un bord circulaire (24), la première couronne (11) comportant une paroi cylindrique (25) sur le bord circulaire (24), la paroi cylindrique (11) présentant une extrémité libre (26) destinée à être pressée contre la deuxième pièce (3) quand la vis (5) est vissée dans le filetage.

8. Procédé d'assemblage d'une première pièce (2) et d'une deuxième pièce (3) à l'aide d'un système d'écrou flottant (1) selon l'une des revendications 1 à 7, où le procédé comprend les étapes suivantes :
- une étape (E1) d'introduction du premier cylindre (8) dans la deuxième ouverture (9) par la première extrémité (10) du premier cylindre (8) ;
- une étape (E2) d'introduction d'une vis (5) dans la première ouverture (4) ;
- une première étape (E3) de déformation par cisaillement du premier cylindre (8) jusqu'à ce que le premier axe de révolution (A1) et le troisième axe de révolution (A3) du deuxième cylindre (13) soient sensiblement confondus ;
- une étape (E4) d'introduction de la vis (5) dans le deuxième cylindre (13) ;
- une étape (E5) de vissage de la vis (5) dans le filetage de la surface interne (14) du deuxième cylindre (13) ;
- une deuxième étape (E6) de déformation par compression du premier cylindre (8) jusqu'à ce que la rondelle (15) presse le première couronne (11) contre la deuxième pièce (3).

9. Procédé selon la revendication 8,
**caractérisé en ce que** l'étape (E1) d'introduction du premier cylindre (8) comprend :
- une sous-étage (E11) de pliage de la deuxième couronne (16) par déformation élastique contre le premier cylindre (8) en passant à travers la deuxième ouverture (9) ;
- une sous-étape (E12) de dépliage de la deuxième couronne (16) après le passage de la deuxième couronne (16) dans la deuxième ouverture (9).

10. Procédé selon l'une des revendications 8 et 9,
**caractérisé en ce que** la première étape (E3) de déformation comprend :
- une sous-étape (E31) d'introduction de la vis (5) dans la partie conique (19) ;
- une sous-étape (E32) de déformation du premier cylindre (8) au fur et à mesure que la vis (5) entre dans la partie conique (19) jusqu'à ce que la vis (5) entre dans le deuxième cylindre (13).

## Patentansprüche

1. Schwimmendes Muttersystem, welches dazu bestimmt ist, ein erstes Teil (2) und ein zweites Teil (3) zusammenzubauen, wobei das erste Teil (2) eine erste Öffnung (4) aufweist, die für den Durchgang einer Schraube (5) bestimmt ist, wobei die erste Öffnung (4) eine erste Rotationsachse (A1) aufweist,
wobei das System mindestens eine Käfigvorrichtung (6) aus Elastomer und eine Muttervorrichtung (7) umfasst,
wobei die Käfigvorrichtung (6) aufweist:
- einen ersten Hohlzylinder (8), der eine zweite Rotationsachse (A2) und einen Außendurchmesser (D1), der im Wesentlichen gleich einem Durchmesser einer in dem zweiten Teil (3) ausgebildeten zweiten Öffnung (9) ist, aufweist, wobei der erste Zylinder (8) dazu bestimmt ist, mit einem ersten Ende (10) des ersten Zylinders (8) in die zweite Öffnung (9) eingeführt zu werden,
- einen ersten Kranz (11), der um ein zweites Ende (12) des ersten Zylinders (8) herum auf der Außenfläche (80) des ersten Zylinders (8) vorsteht, wobei der erste Kranz (11) einen Durchmesser (D2) aufweist, der dazu bestimmt ist, größer als der Durchmesser der zweiten Öffnung (9) zu sein;
wobei die Muttervorrichtung (7) umfasst:
- einen zweiten Hohlzylinder (13), der eine zur zweiten Rotationsachse (A2) parallele dritte Rotationsachse (A3) und eine mit einem Gewinde versehene Innenfläche (14) aufweist, wobei das Gewinde dazu bestimmt ist, mit der Schraube (5) durch Eindrehen der Schraube (5) zusammenzuwirken,
- eine Unterlegscheibe (15), die mit dem zweiten Zylinder (13) fest verbunden ist, wobei sich die Unterlegscheibe (15) um den zweiten Zylinder (13) herum erstreckt, wobei die Unterlegscheibe (15) einen Durchmesser (D3) aufweist, der dazu bestimmt ist, größer als der Durchmesser der zweiten Öffnung (9) zu sein, wobei die Unterlegscheibe (15) in den ersten Kranz (11) eingetrieben wird, wobei die Unterlegscheibe (15) dazu bestimmt ist, den ersten Kranz (11) an das zweite Teil (3) anzupressen, wenn die Schraube (5) in das Gewinde eingeschraubt wird; wobei der erste Zylinder (8) dafür ausgelegt ist, sich beim Einschrauben der Schraube (5) zu verformen, damit die erste Rotationsachse (A1) und die dritte Rotationsachse (A3) im Wesentlichen zusammenfallen, wenn eine Schraube (5) in das Gewinde eingeschraubt ist.

2. System nach Anspruch 1,
**dadurch gekennzeichnet, dass** die Käfigvorrichtung (6) außerdem einen zweiten Kranz (16) umfasst, der um das erste Ende (10) des ersten Zylinders (8) herum auf einer Außenfläche (80) des ersten Zylinders (8) vorsteht, wobei der zweite Kranz (16) einen Durchmesser (D4) aufweist, der dafür ausgelegt ist, größer als der Durchmesser der zweiten Öffnung (9) zu sein, wobei der zweite Kranz (16) derart elastisch verformbar ist, dass er sich einerseits gegen den ersten Zylinder (8) biegt, um sich durch die zweite Öffnung (9) hindurchzubewegen, wenn ein Benutzer die Käfigvorrichtung (6) durch die zweite Öffnung (9) parallel zur zweiten Rotationsachse (A2) hindurchdrückt, und er sich andererseits wieder aufbiegt, nachdem er sich durch die zweite Öffnung (9) hindurchbewegt hat,
wobei der zweite Kranz (16) dazu bestimmt ist, zwischen dem ersten Teil (2) und dem zweiten Teil (3) festgeklemmt zu werden, wenn die Schraube (5) in das Gewinde eingeschraubt ist.

3. System nach Anspruch 2,
**dadurch gekennzeichnet, dass** der zweite Kranz (16) mehrere Flügel (17) umfasst, die um das erste Ende (10) des ersten Zylinders (8) herum vorstehen.

4. System nach Anspruch 3,
**dadurch gekennzeichnet, dass** die Außenfläche (80) des ersten Zylinders (8) mehrere zueinander parallele Längsnuten (18) aufweist, wobei jede der Nuten (18) genau gegenüber jeweils einem der Flügel (17) angeordnet ist, wobei jede der Nuten (18) dazu bestimmt ist, den Flügel (17) aufzunehmen, gegenüber dem die Nut (18) angeordnet ist, wenn der Flügel (17) umgebogen wird, damit sich der zweite Kranz (16) durch die zweite Öffnung (9) hindurchbewegen kann, wenn ein Benutzer die Käfigvorrichtung (6) durch die zweite Öffnung (9) parallel zur zweiten Rotationsachse (A2) hindurchdrückt.

5. System nach einem der Ansprüche 1 bis 4,
**dadurch gekennzeichnet, dass** die Muttervorrichtung (7) einen konischen Teil (19) umfasst, der mit dem zweiten Zylinder (13) fest verbunden ist, wobei der konische Teil (19) die Form eines Kegelstumpfes hat, der eine kleine Grundfläche (21) hat, die den konischen Teil (19) mit einem ersten Ende (20) des zweiten Zylinders (13) verbindet, und eine große Grundfläche (22), die dazu bestimmt ist, der ersten Öffnung (4) gegenüberzuliegen.

6. System nach einem der Ansprüche 1 bis 5,
**dadurch gekennzeichnet, dass** es außerdem einen Ring (23) umfasst, der eine Rotationsachse aufweist, die mit der zweiten Rotationsachse (A2) zusammenfällt, wobei der Ring (23) in den ersten Zylinder (8) eingetrieben ist, wobei der Ring (23) eine Dicke (D5) aufweist, die im Wesentlichen dazu bestimmt ist, gleich einer Dicke des zweiten Teils (3) zu sein, das dazu eingerichtet ist, mit dem ersten Teil (2) durch das schwimmende Muttersystem (1) zusammengebaut zu werden, wobei der Ring (23) dafür ausgelegt ist, sich nicht zu verformen, wenn sich der erste Zylinder (8) verformt.

7. System nach einem der Ansprüche 1 bis 6,
**dadurch gekennzeichnet, dass** der erste Kranz (11) einen kreisförmigen Rand (24) aufweist, wobei der erste Kranz (11) eine zylindrische Wand (25) an dem kreisförmigen Rand (24) umfasst, wobei die zylindrische Wand (11) ein freies Ende (26) aufweist, dass dazu bestimmt ist, an das zweite Teil (3) angepresst zu werden, wenn die Schraube (5) in das Gewinde eingeschraubt wird.

8. Verfahren zum Zusammenbau eines ersten Teils (2) und eines zweiten Teils (3) mithilfe eines schwimmenden Muttersystems (1) nach einem der Ansprüche 1 bis 7, wobei das Verfahren die folgenden Schritte umfasst:
- einen Schritt (E1) der Einführung des ersten Zylinders (8) mit dem ersten Ende (10) des ersten Zylinders (8) in die zweite Öffnung (9);
- einen Schritt (E2) der Einführung einer Schraube (5) in die erste Öffnung (4);
- einen ersten Schritt (E3) der Verformung des ersten Zylinders (8) durch Scherung, bis die erste Rotationsachse (A1) und die dritte Rotationsachse (A3) des zweiten Zylinders (13) im Wesentlichen zusammenfallen;
- einen Schritt (E4) der Einführung der Schraube (5) in den zweiten Zylinder (13);
- einen Schritt (E5) des Einschraubens der Schraube (5) in das Gewinde der Innenfläche (14) des zweiten Zylinders (13);
- einen zweiten Schritt (E6) der Verformung des ersten Zylinders (8) durch Zusammendrücken, bis die Unterlegscheibe (15) den ersten Kranz (11) an das zweite Teil (3) anpresst.

9. Verfahren nach Anspruch 8,
**dadurch gekennzeichnet, dass** der Schritt (E1) der Einführung des ersten Zylinders (8) umfasst:
- einen Teilschritt (E11) des Biegens des zweiten Kranzes (16) durch elastische Verformung gegen den ersten Zylinder (8) beim Hindurchbewegen durch die zweite Öffnung (9);
- einen Teilschritt (E12) des Aufbiegens des zweiten Kranzes (16) nach der Hindurchbewegung des zweiten Kranzes (16) durch die zweite Öffnung (9).

10. Verfahren nach einem der Ansprüche 8 und 9, **dadurch gekennzeichnet, dass** der erste Schritt (E3) der Verformung umfasst:
- einen Teilschritt (E31) der Einführung der Schraube (5) in den konischen Teil (19);
- einen Teilschritt (E32) der allmählichen Verformung des ersten Zylinders (8) im Verlaufe der Hineinbewegung der Schraube (5) in den konischen Teil (19), bis sich die Schraube (5) in den zweiten Zylinder (13) hineinbewegt.

## Claims

1. Floating nut system intended for assembling a first component part (2) and a second component part (3), the first component part (2) comprising a first opening (4) intended for the passage of a screw (5), the first opening (4) having a first axis of revolution (A1),
wherein the system comprises at least one cage device (6) made of elastomer and a nut device (7),
the cage device (6) comprising:
- a first hollow cylinder (8) having a second axis of revolution (A2) and an outside diameter (D1) substantially equal to a diameter of a second opening (9) made in the second component part (3), the first cylinder (8) being intended to be introduced into the second opening (9) via a first end (10) of the first cylinder (8),
- a first ring (11) projecting around a second end (12) of the first cylinder (8) on the external surface (80) of the first cylinder (8), the first ring (11) having a diameter (D2) intended to be greater than the diameter of the second opening (9);
the nut device (7) comprising:
- a second hollow cylinder (13) having a third axis of revolution (A3) parallel to the second axis of revolution (A2) and an internal surface (14) comprising a thread, the thread being intended to cooperate with the screw (5) through the screwing-in of the screw (5),
- a washer (15) secured to the second cylinder (13), the washer (15) encircling the second cylinder (13), the washer (15) having a diameter (D3) intended to be greater than the diameter of the second opening (9), the washer (15) being set in the first ring (11), the washer (15) being intended to press the first ring (11) against the second component part (3) when the screw (5) is screwed into the thread; the first cylinder (8) being configured to deform during the screwing-in of the screw (5) so that the first axis of revolution (A1) and the third axis of revolution (A3) are substantially coincident when a screw (5) is screwed into the thread.

2. System according to Claim 1,
**characterized in that** the cage device (6) further comprises a second ring (16) projecting around the first end (10) of the first cylinder (8) on an external surface (80) of the first cylinder (8), the second ring (16) having a diameter (D4) configured to be greater than the diameter of the second opening (9), the second ring (16) being elastically deformable so that, on the one hand, it can fold against the first cylinder (8) in order to pass through the second opening (9) when a user forces the cage device (6) to pass through the second opening (9) parallel to the second axis of revolution (A2), and, on the other hand, it unfolds after it has passed through the second opening (9),
the second ring (16) being intended to be clamped between the first component part (2) and the second component part (3) when the screw (5) is screwed into the thread.

3. System according to Claim 2,
**characterized in that** the second ring (16) comprises a plurality of fins (17) projecting around the first end (10) of the first cylinder (8).

4. System according to Claim 3,
**characterized in that** the external surface (80) of the first cylinder (8) has a plurality of mutually parallel longitudinal grooves (18), each of the grooves (18) being arranged in line with each of the fins (17), each of the grooves (18) being intended to house the fin (17) in line with which a groove (18) is arranged when said fin (17) is folded so that the second ring (16) can pass through the second opening (9) when a user forces the cage device (6) to pass through the second opening (9) parallel to the second axis of revolution (A2).

5. System according to one of Claims 1 to 4, **characterized in that** the nut device (7) comprises a conical portion (19) secured to the second cylinder (13), the conical portion (19) having a truncated cone shape having a small base (21) connecting the conical portion (19) to a first end (20) of the second cylinder (13) and a large base (22) intended to face the first opening (4).

6. System according to one of Claims 1 to 5, **characterized in that** it further comprises a hoop (23) having an axis of revolution coincident with the second axis of revolution (A2), the hoop (23) being set in the first cylinder (8), the hoop (23) having a thickness (D5) substantially intended to be equal to a thickness of the second component part (3) capable of being assembled with the first component part (2) by the floating nut system (1), the hoop (23) being configured so as not to deform when the first cylinder (8) deforms.

7. System according to one of Claims 1 to 6, **characterized in that** the first ring (11) has a circular edge (24), the first ring (11) comprising a cylindrical wall (25) on the circular edge (24), the cylindrical wall (11) having a free end (26) intended to be pressed against the second component part (3) when the screw (5) is screwed into the thread.

8. Method for assembling a first component part (2) and a second component part (3) using a floating nut system (1) according to one of Claims 1 to 7, wherein the method comprises the following steps:
- a step (E1) of introducing the first cylinder (8) into the second opening (9) via the first end (10) of the first cylinder (8);
- a step (E2) of introducing a screw (5) into the first opening (4);
- a first deformation step (E3) of deforming the first cylinder (8) by shearing until the first axis of revolution (A1) and the third axis of revolution (A3) of the second cylinder (13) are substantially coincident;
- a step (E4) of introducing the screw (5) into the second cylinder (13);
- a step (E5) of screwing the screw (5) into the thread of the internal surface (14) of the second cylinder (13);
- a second deformation step (E6) of deforming the first cylinder (8) by compression until the washer (15) presses the first ring (11) against the second component part (3).

9. Method according to Claim 8,
**characterized in that** the step (E1) of introducing the first cylinder (8) comprises:
- a sub-step (E11) of folding the second ring (16) by elastic deformation against the first cylinder (8) by passing it through the second opening (9);
- a sub-step (E12) of unfolding the second ring (16) after the second ring (16) has passed through the second opening (9).

10. Method according to either of Claims 8 and 9, **characterized in that** the first deformation step (E3) comprises:
- a sub-step (E31) of introducing the screw (5) into the conical portion (19);
- a sub-step (E32) of deforming the first cylinder (8) as the screw (5) gradually enters the conical portion (19) until the screw (5) enters the second cylinder (13).
